# EUROPÄISCHE PATENTSCHRIFT

(11) **EP 3 129 229 B1**
(45) Veröffentlichungstag und Bekanntmachung des Hinweises auf die Patenterteilung: **06.06.2018**
(21) Anmeldenummer: 15709472.3
(22) Anmeldetag: 11.03.2015
(51) Int. Cl.: B32B 38/18, B32B 39/00, B32B 37/12

(54) **VERFAHREN UND FERTIGUNGSSYSTEM ZUM KASCHIEREN VON INTERIEURKOMPONENTEN VON FAHRZEUGEN**
METHOD AND PRODUCTION SYSTEM FOR LAMINATING INTERIOR COMPONENTS IN VEHICLES
PROCÉDÉ ET SYSTÈME DE FABRICATION POUR CONTRE-COLLER DES ÉLÉMENTS INTÉRIEURS DE VÉHICULES

(30) Priorität: 08.04.2014 DE 102014206751
(43) Veröffentlichungstag der Anmeldung: 15.02.2017
(73) Patentinhaber: Bayerische Motoren Werke Aktiengesellschaft, 80809 München (DE)
(72) Erfinder: ALT, Sebastian, Simpsonville, SC 29681 (US); HOBELSBERGER, Stefan, 84088 Neufahrn (DE); MEINDL, Gerald, 84103 Postau (DE); MELZIG, Joachim, 84036 Landshut (DE)
(86) Internationale Anmeldenummer: PCT/EP2015/055001
(87) Internationale Veröffentlichungsnummer: WO 2015/154931

(56) Entgegenhaltungen:
- EP-A2- 2 415 601

## Beschreibung

Die vorliegende Erfindung betrifft ein Verfahren zum Kaschieren von Interieurkomponenten von Fahrzeugen, insbesondere ein Verfahren zum Kaschieren von Instrumententafeln sowie ein Fertigungssystem zur Durchführung eines Verfahrens zum Kaschieren von Interieurkomponenten von Fahrzeugen.

Grundsätzlich ist es bekannt, dass Verkleidungsteile von Fahrzeugen, wie z.B. Instrumententafeln, mit meist folienartigen Kaschierelementen, z.B. aus Echtleder, Kunstleder oder Textilien, unter Verwendung von geeigneten Kaschiermitteln, wie z.B. Lack, Leim oder Wachs, kaschiert werden. Das Kaschiermittel dient dabei als Haftmittel, um eine dauerhafte Fixierung des Kaschierelements an dem Verkleidungsteil zu erreichen.

Beim Kaschieren werden mindestens zwei Lagen gleicher oder verschiedener Materialien schichtweise miteinander verbunden, so dass eine erste Lage eine zweite Lage zumindest teilweise überdeckt. Im Automobilbau werden z.B. zur Verkleidung des Innenraums vorgesehene Kunststoffformteile, z.B. aus Polyurethanschaum, mit Folien kaschiert, um einen besonderen ästhetischen und/oder funktionalen Effekt zu erzielen, z.B. um die Oberfläche des Kunststoffformteils vor äußeren Einflüssen zu schützen. Hierfür ist i.d.R. eine Vielzahl von Einzelprozessen erforderlich, die sukzessive an verschiedenen Arbeitsstationen ausgeführt werden. Die Zwischenprodukte werden dabei mittels geeigneter Fördermittel von einer Arbeitsstation zur nächsten Arbeitsstation weitergeleitet. Alternativ werden mehrere oder sämtliche Einzelprozesse an einer Arbeitsstation ausgeführt.

Aus der EP 2 415 601 A2 ist ein Verfahren zur Herstellung von Sandwichplatten bekannt bei dem eine Mittelschicht zunächst beidseitig mit einem Klebstoff beschichtet und anschließend in eine schließbare Form eingebracht wird. In dieser Form wird die Mittelschicht zwischen zwei Deckschichten zu der Sandwichplatte verpresst. nachteilig an diesem Verfahren ist insbesondere, dass die Mittelschicht bei der Durchführung des Verfahrens mehrfach positioniert werden muss. Dieses Positionieren ist sehr aufwändig und limitiert eine Produktivität des Verfahrens.

Nachteilhaft bei bekannten Verfahren zum Kaschieren von Interieurkomponenten von Fahrzeugen ist, dass die gesamte Produktionskapazität eines Fertigungssystems zum Herstellen von kaschierten Interieurkomponenten stark begrenzt ist, da einige Arbeitstationen an ihrer Kapazitätsgrenze arbeiten und andere Arbeitsstationen nur schwach ausgelastet sind. Zur Steigerung der Produktionskapazität werden daher i.d.R. parallel arbeitende Fertigungssysteme zum Kaschieren von Interieurkomponenten bereitgestellt, um den Produktionsbedarf zu decken. Hierfür sind mitunter erhebliche Investitionen notwendig, die sich negativ auf den Unternehmensgewinn auswirken.

Es ist demnach die Aufgabe der vorliegenden Erfindung, in kostengünstiger und einfacher Weise die voranstehend beschriebenen Nachteile zumindest teilweise zu beheben. Insbesondere ist es Aufgabe der vorliegenden Erfindung, ein Verfahren zum Kaschieren von Interieurkomponenten von Fahrzeugen bereitzustellen, mit dem verglichen mit herkömmlichen gattungsgemäßen Verfahren die Produktionskapazität vorhandener Produktionsanlagen erheblich vergrößert wird. Des Weiteren ist es die Aufgabe der vorliegenden Erfindung ein Fertigungssystem zur Durchführung eines erfindungsgemäßen Verfahrens bereitzustellen.

Die voranstehende Aufgabe wird gelöst durch ein Verfahren zum Kaschieren von Interieurkomponenten mit den Merkmalen des Anspruchs 1 sowie ein Fertigungssystem zum Kaschieren von Interieurkomponenten mit den Merkmalen des Anspruchs 8. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren zum Kaschieren von Interieurkomponenten beschrieben sind, selbstverständlich auch im Zusammenhang mit dem erfindungsgemäßen Fertigungssystem und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren zum Kaschieren von Interieurkomponenten von Fahrzeugen weist die folgenden Schritte auf:
- Bereitstellen mindestens eines Kaschierelements, mindestens eines Kaschiermittels und mindestens einer Interieurkomponente,
- Anordnen des Kaschierelements auf einem Trägerelement in einem ersten Hauptprozess,
- Fixierung des Kaschierelements an einer Interieurkomponente unter Verfestigung des Kaschiermittels in einem zweiten Hauptprozess, wobei das Kaschiermittel zwischen dem Kaschierelement und der Interieurkomponente angeordnet ist;

Hierbei werden der erste Hauptprozess in einem ersten Fertigungsabschnitt und der zweite Hauptprozess in einem zweiten Fertigungsabschnitt eines Fertigungssystems ausgeführt, wobei in dem ersten Fertigungsabschnitt mehrere erste Hauptprozesse parallel durchgeführt werden, so dass der erste Fertigungsabschnitt und der zweite Fertigungsabschnitt im Idealfall eine im Wesentlichen gleichhohe Fertigungskapazität aufweisen. Dieses Verfahren hat den Vorteil gegenüber herkömmlichen Verfahren zum Kaschieren von Interieurkomponenten, dass sämtliche Fertigungsabschnitte maximal auslastbar sind, da sie die gleiche Fertigungskapazität aufweisen. Durch das Parallelisieren sogenannter Bottleneckprozesse, zu denen der erste Hauptprozess zählt, da er wesentlich zeitintensiver als der zweite Hauptprozess ist, wird der Durchsatz des Fertigungssystems deutlich erhöht. Bei optimaler Abstimmung des ersten Fertigungsabschnitts mit dem zweiten Fertigungsabschnitt entspricht beim Kaschieren einer beliebigen Anzahl von Interieurkomponenten die Betriebszeit des ersten Fertigungsabschnitts im Wesentlichen der Betriebszeit des zweiten Fertigungsabschnitts.

Um die Fertigungskapazität des ersten Fertigungsabschnitts der Fertigungskapazität des zweiten Fertigungsabschnitts anzupassen, kann vorzugsweise das Verhältnis der parallel ausgeführten ersten Hauptprozesse zu der Anzahl der parallel ausgeführten zweiten Hauptprozesse dem Verhältnis der Dauer des ersten Hauptprozesses zu dem zweiten Hauptprozess entsprechen. Im einfachsten Fall wird nur ein zweiter Hauptprozess ausgeführt. Bei einer Dauer von beispielsweise 1 min für einen ersten Hauptprozess und einer Dauer von beispielsweise 15 sec für den zweiten Hauptprozess wären somit pro ausgeführtem zweiten Hauptprozess vorzugsweise vier erste Hauptprozesse parallel auszuführen. Auf diese Weise können die Fertigungskapazitäten sämtlicher Fertigungsabschnitte optimal ausgenutzt werden. Die Materialströme der Zwischenprodukte des ersten Hauptprozesses müssen anschließend zu dem Materialstrom des zweiten Fertigungsabschnitts zusammengeführt werden. Vorzugsweise werden parallel ausgeführten ersten Hauptprozesse zeitlich phasenverschoben ausgeführt, so dass die Zwischenprodukte der parallel arbeitenden Arbeitsstationen des ersten Fertigungsabschnitts zu unterschiedlichen Zeit fertiggestellt werden und dem zweiten Fertigungsabschnitt zugeführt werden. Besonders bevorzugt ist diese Phasenverschiebung derart gewählt, dass ein Zeitraum zwischen der Fertigstellung eines Zwischenprodukts und des nächsten fertiggestellten Zwischenprodukts im ersten Fertigungsabschnitt für die folgenden Zwischenprodukte im Wesentlichen konstant ist. Somit lassen sich die fertiggestellten Zwischenprodukte besonders gut zu einem Materialstrom zusammenführen und müssen nicht in einem Puffer zwischengelagert werden.

Das Kaschiermittel kann erfindungsgemäß direkt auf der Interieurkomponente oder dem Kaschierelement, z.B. durch Sprühauftrag, aufgetragen werden. Vorzugsweise ist das Kaschiermittel durch Temperatur, vorzugsweise ca. 60°C, und/oder Druck aktivierbar, d.h., dass das Kaschiermittel erst bei entsprechenden physikalischen Bedingungen seine Bindungswirkung entfaltet. Hierbei kann das Kaschiermittel z.B. ab einer Temperatur von ca. 60°C aufweichen, so dass es gut mit dem Kaschierelement und der Interieurkomponente verbindbar ist, und bei einer niedrigeren Temperatur aushärten. Dieser Prozess ist vorzugsweise irreversibel, so dass das Kaschiermittel bei erneutem Erhitzen auf 60°C oder höher nicht wieder aufweicht. Dies ist von Vorteil, da PKW Interieurkomponenten oftmals über längere Zeiträume intensiver Sonnenstrahlung ausgesetzt sind und ein Ablösen des Kaschierelements infolge übermäßiger Erhitzung zu vermeiden ist. Der Auftrag des Kaschiermittels kann direkt auf der Interieurkomponente und/oder dem Kaschierelement erfolgen.

Der zweite Fertigungsabschnitt weist vorzugsweise eine Kaschieranlage mit einem integrierten Fördermittel, insbesondere einem Rundtisch und/oder einer Transferstraße, auf. Die Kaschieranlage ist vorzugsweise derart ausgebildet, dass sich das Fördermittel kontinuierlich weiterbewegt und sich eine in der Kaschieranlage integrierte Fixierstation bzw. Teile dieser Fixierstation, wie z.B. Presswerkzeuge, während eines Prozessschritts mit dem Fördermittel mit bewegen. Somit ist ein im Wesentlichen kontinuierlicher zweiter Hauptprozess erzielbar. Alternativ kann das integrierte Fördermittel für die Dauer eines Arbeitstakts angehalten werden. In diesem Fall sind die Arbeitstationen vorzugsweise im Wesentlichen ortsfest in der Kaschieranlage angeordnet.

Erfindungsgemäß weist der erste Hauptprozess eine Positionierung und eine Ausrichtung des Kaschierelements auf dem Trägerelement auf. Hierdurch wird eine relative Lage des Kaschierelements zum Trägerelement festgelegt. Dies hat den Vorteil, dass bei bekannter Lage des Trägerelements die Lage des Kaschierelements ebenfalls bekannt ist und eine für den zweiten Hauptprozess erforderliche Ausrichtung des Kaschierelements durch eine entsprechende Ausrichtung des Trägerelements, die i.d.R. deutlich weniger zeitintensiv als eine Ausrichtung des Kaschierelements ist, erfolgen kann. Diese Zeitersparnis ermöglicht eine höhere Taktung des zweiten Hauptprozesses und somit eine bessere Auslastung des zweiten Fertigungsabschnitts.

Vorzugsweise ist das Trägerelement als Interieurkomponente ausgebildet. Dies hat den Vorteil, dass ein Arbeitsschritt des Anordnens des Trägerelements mit dem daran angeordneten Kaschierelement an der Interieurkomponente entfällt und somit die Effizienz des Verfahrens weiter gesteigert wird. In diesem Fall ist es bevorzugt, dass das Kaschiermittel vor dem Anordnen des Kaschierelements an der Interieurkomponente auf die zu kaschierende Oberfläche der Interieurkomponente und/oder einer Haftseite des Kaschierelements aufgetragen wird.

Alternativ hierzu kann es von Vorteil sein, wenn das Trägerelement eine Topografie aufweist, die einem inversen Abbild der zu kaschierenden Oberfläche der Interieurkomponente entspricht und das Kaschierelement entsprechend auf dem Trägerelement angeordnet wird, so dass beim Zusammensetzen des Trägerelements mit der Interieurkomponente das Kaschierelement relativ zur Interieurkomponente eine vordefinierte Lage aufweist. Hierdurch ist ein Ausrichten des Kaschierelements auf der Interieurkomponente durch ein Ausrichten des Trägerelements mit der Interieurkomponente möglich. Wegen der Formgebung des Trägerelements ist ein Ausrichten des Trägerelements mit der Interieurkomponente wesentlich einfacher und somit schneller als ein Ausrichten des Kaschierelements mit der Interieurkomponente.

Ein weiterer Vorteil ist erzielbar, wenn das Kaschierelement während des Anordnens bzw. nach dem Anordnen auf dem Trägerelement an diesem reversibel, insbesondere über eine Klemmvorrichtung oder eine temporäre Verklebung, fixiert wird. Hierdurch wird verhindert, dass sich die Lage des Kaschierelements, z.B. während des Transports in den zweiten Fertigungsabschnitt relativ zum Trägerelement verändert und die ursprüngliche Lage vor dem zweiten Hauptprozess wiederhergestellt werden muss, um ein fehlerhaftes Verbinden von Kaschierelement und Interieurkomponente sowie daraus resultierende Mehrkosten zu vermeiden.

Vorteilhaft ist es darüber hinaus, wenn das Anordnen des Kaschierelements auf dem Trägerelement auf einer verfahrbaren Transporteinheit erfolgt. Derartige Transporteinheiten werden auch als "Shuttle" bezeichnet. Die Transporteinheit ist weiter bevorzugt als Plattform mit einer Aufnahme ausgebildet auf der das Trägerelement abgelegt wird, so dass zumindest eine seitliche Relativbewegung des Trägerelements zur Plattform verhindert wird. Die Transporteinheiten sind vorzugsweise zwischen dem ersten Fertigungsabschnitt und dem zweiten Fertigungsabschnitt verfahrbar. Weiter bevorzugt können die Transporteinheiten ihre Geschwindigkeit der jeweiligen Taktgeschwindigkeit des ersten Fertigungsabschnitts bzw. des zweiten Fertigungsabschnitts anpassen.

Ebenfalls von Vorteil kann es sein, wenn das Kaschierelement und/oder das Kaschiermittel vor dem vor dem zweiten Hauptprozess auf der Transporteinheit mindestens einem Behandlungsprozess, insbesondere einer thermischen und/oder chemischen Behandlung, unterzogen werden. Hierdurch kann z.B. die Bindungswirkung des Kaschiermittels verbessert und/oder die Formstabilität des Kaschierelements, z.B. bei hoher Erwärmung durch Sonnenstrahlung, optimiert werden.

Vorteilhaft ist es weiter, wenn die Verfestigung des Kaschiermittels durch Druck und/oder Temperatur erfolgt. Hierbei ist es weiter bevorzugt, dass der Druck über ein Oberwerkzeug, einen Roboter und/oder eine Walze auf das Kaschierelement aufgebracht wird. Derartige Kaschiermittel sind für das Kaschieren von Interieurkomponenten eines Fahrzeugs besonders geeignet, da mit ihnen eine hohe Festigkeit sowie Temperaturstabilität erzielbar sind.

Ebenfalls Gegenstand der vorliegenden Erfindung ist ein Fertigungssystem für die Durchführung eines erfindungsgemäßen Verfahrens zum Kaschieren von Interieurkomponenten, aufweisend:
- eine Mehrzahl von Transporteinheiten zur Aufnahme von jeweils mindestens einer Interieurkomponente,
- eine Mehrzahl Anordnungsstationen zur Anordnung von Kaschierelementen auf Trägerelementen, insbesondere Interieurkomponenten, wobei die Trägerelemente auf Transporteinheiten angeordnet sind, und
- eine Kaschieranlage mit mindestens einer Fixierstation zur Fixierung von Kaschierelementen an den Interieurkomponenten,

Darüber hinaus weist Fertigungssystem mindestens doppelt so viele Anordnungsstationen wie Fixierstationen auf. Da Anordnungsstationen zur Anordnung von Kaschierelementen auf Trägerelementen grundsätzlich eine längere Durchlaufzeit als Fixierstationen haben, hat das erfindungsgemäße Fertigungssystem gegenüber herkömmlichen Fertigungssystemen den Vorteil, dass im Produktionsbetrieb eine höhere durchschnittliche Auslastung der einzelnen Produktionsstationen erzielt werden kann und die Effizienz des Fertigungssystems somit deutlich erhöht wird.

Vorzugsweise weist die Kaschiermaschine mindestens ein Oberwerkzeug und/oder einen Roboter und/oder eine Walze zum Anpressen des Kaschiermittels an die Interieurkomponente auf.

Durch das erfindungsgemäße Fertigungssystem werden die gleichen Vorteile erzielt, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt schematisch:

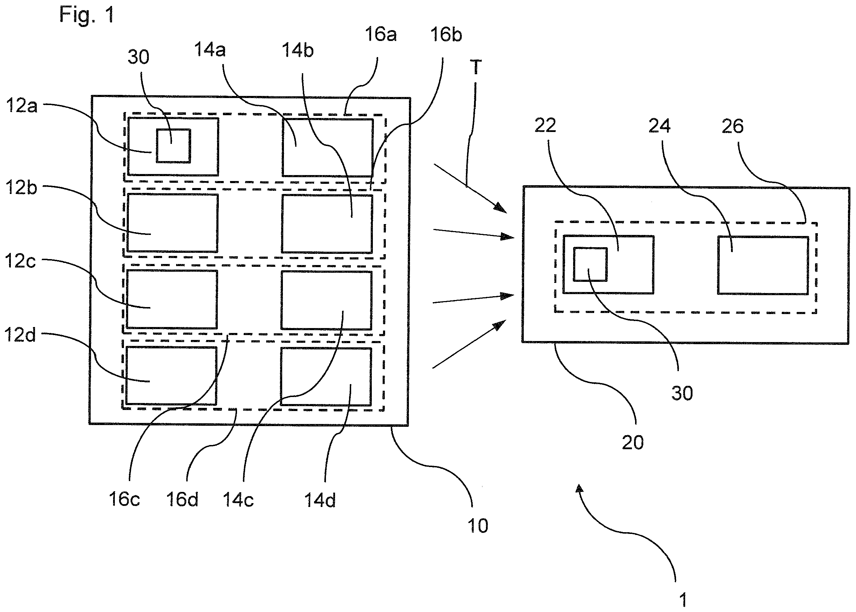

- Fig. 1: einen Aufbau einer Ausführungsform eines erfindungsgemäßen Fertigungssystems.

In Fig. 1 ist Aufbau einer Ausführungsform eines erfindungsgemäßen Fertigungssystems 1 schematisch dargestellt. Das Fertigungssystem 1 ist in einen ersten Fertigungsabschnitt 10 und einen zweiten Fertigungsabschnitt 20 aufgeteilt. In dem ersten Fertigungsabschnitt 10 werden - in dieser Darstellung nicht abgebildete - Kaschierelemente zum Kaschieren von Interieurkomponenten vorbereitet, während im zweiten Fertigungsabschnitt 20 die Kaschierelemente dauerhaft an den Interieurkomponenten fixiert werden.

Der erste Fertigungsabschnitt 10 weist für jeden durchzuführenden Einzelprozess des ersten Hauptprozesses vier parallel arbeitende Arbeitsstationen auf. Für den Prozess des Bereitstellens der Kaschierelemente sind vier Bereitstellungsstationen 12a, 12b, 12c, 12d vorgesehen. Je nach Anforderung können in den Bereitstellungsstationen 12a, 12b, 12c, 12d auch Trägerelemente und Kaschiermittel bereitgestellt werden. Dies hängt insbesondere davon ab, ob eine Anordnung der Kaschierelemente an den Interieurkomponenten bereits im ersten Fertigungsabschnitt 10 - Alternative 1 - oder erst im zweiten Fertigungsabschnitt 20 - Alternative 2 - erfolgen soll.

In dem Fall der Alternative 1 sind die Bereitstellungsstationen 12a, 12b, 12c, 12d zur Bereitstellung der Kaschierelemente, Kaschiermittel und Interieurkomponenten ausgebildet. Hierfür weisen die Bereitstellungsstationen beispielsweise einen Roboter, insbesondere einen Knickarmroboter auf, mit dem die entsprechenden Komponenten auf einer Aufnahmefläche anordenbar sind. Dafür wird zunächst eine Interieurkomponente auf der Aufnahmefläche einer Transporteinheit 30 abgestellt, so dass die zu kaschierende Oberfläche der Interieurkomponente der Transporteinheit 30 abgewandt ist. Anschließend wird das Kaschiermittel, z.B. durch Sprühauftrag, auf der zu kaschierenden Oberfläche und/oder einer Haftseite des Kaschierelements aufgebracht und das Kaschierelement mit der Haftseite auf die zu kaschierende Oberfläche der Interieurkomponente gelegt. Danach wird die Transporteinheit zu einer Ausricht- und Fixierstation 14a, 14b, 14c, 14d verfahren. Eine Kombination von Bereitstellungsstation 12a, 12b, 12c, 12d und Ausricht- und Fixierstation 14a, 14b, 14c, 14d wird auch als Anordnungsstation 16a, 16b, 16c, 16d bezeichnet.

In dem gezeigten Beispiel weist der erste Fertigungsabschnitt 10 vier Ausricht- und Fixierstationen 14a, 14b, 14c, 14d auf. In der Ausricht- und Fixierstation 14a, 14b, 14c, 14d wird das Kaschierelement auf der Interieurkomponente, z.B. von Knickarmrobotern, in eine vorbestimmte relative Lage gebracht und reversibel an dieser fixiert, damit sich die relative Lage des Kaschierelements zur Interieurkomponente nicht verändert. Alternativ kann der erste Fertigungsabschnitt 10 auch derart ausgebildet sein, dass die Bereitstellung, das Ausrichten und das Fixieren an einer einzelnen Universalarbeitsstation ausgeführt werden und dass der erste Fertigungsabschnitt 10 mehrere, z.B. vier, dieser Universalarbeitsstationen aufweist.

Das Fertigungssystem weist eine Fördereinrichtung auf, um die Transporteinheit 30 in Transportrichtung T von dem ersten Fertigungsabschnitt 10 in den zweiten Fertigungsabschnitt 20 zu verfahren. Die Fördereinrichtung ist ausgebildet, Transporteinheiten 30 von parallel arbeitenden Arbeitsstationen des ersten Fertigungsabschnitts zu einem linearen Strom von Transporteinheiten 30 zusammenzuführen und, z.B. hintereinander angeordnet, dem zweiten Fertigungsabschnitt 20 zuzuführen. Je nach Anwendungsfall und Kapazitätsbedarf können auch in dem zweiten Fertigungsabschnitt 20 Arbeitsstationen parallel angeordnet werden.

Der zweite Fertigungsabschnitt 20 weist eine Aufwärmstation 22 und eine Pressstation 24 auf. Eine in den zweiten Fertigungsabschnitt 20 verfahrene Transporteinheit 30 erreicht zunächst die Aufwärmstation 22, in der das Kaschiermittel, z.B. bei einer Temperatur von ca. 60 °C, aktivierbar ist. Von der Aufwärmstation 22 ist die Transporteinheit 30 in die Pressstation 24 verfahrbar. Die Pressstation 24 kann alternativ auch innerhalb der Aufwärmstation 22 angeordnet bzw. mit dieser zusammengefasst sein. Eine Arbeitsstation bzw. eine Gruppe von Arbeitstationen des zweiten Fertigungsabschnitts 20, die eine Fixierung des Kaschierelements an der Interieurkomponente bewirkt, wird auch als Fixierstation 26 bezeichnet.

Die Pressstation 24 weist mindestens einen Druckkörper, z.B. ein Oberwerkzeug und/oder eine Walze und/oder einen Roboter auf, mit dem die Interieurkomponente mit dem Kaschiermittel und dem Kaschierelement verpressbar und aneinander fixierbar ist. Des Weiteren weist die Pressstation 24 einen Ausgang zum Herausfahren der Transporteinheit 30 mit der darauf angeordneten, fertig kaschierte Interieurkomponente auf. Über einen Greifarmroboters ist die fertig kaschierte Interieurkomponente der Transporteinheit 30 entnehmbar und die Transporteinheit 30 wieder zu einer der Bereitstellungsstationen 12a, 12b, 12c, 12d in den ersten Fertigungsabschnitt 10 verfahrbar.

In dem Fall der Alternative 2 sind die Bereitstellungsstationen 12a, 12b, 12c, 12d zur Bereitstellung der Kaschierelemente und Trägerelementen, die zur temporären Fixierung an den Kaschierelementen bestimmt sind, ausgebildet. Ein geeignetes Trägerelement weist vorzugsweise eine als Haltefläche bezeichnete Oberfläche auf, die im Wesentlichen einem inversen Abbild der zu kaschierenden Oberfläche der Interieurkomponente entspricht. Die Bereitstellungsstationen weisen beispielsweise einen Roboter, insbesondere einen Knickarmroboter auf, mit dem die entsprechenden Komponenten auf einer Aufnahmefläche anordenbar sind. Dafür wird zunächst ein Trägerelement auf der Aufnahmefläche einer Transporteinheit 30 abgestellt, so dass die Haltefläche des Trägerelements der Transporteinheit 30 abgewandt ist. Anschließend wird das Kaschierelement mit der der Haftseite abgewandten Seite auf die Haltefläche des Trägerelements gelegt. Danach wird die Transporteinheit zu der Ausricht- und Fixierstation 14a, 14b, 14c, 14d verfahren.

In dem gezeigten Beispiel weist der erste Fertigungsabschnitt 10 vier Ausricht- und Fixierstationen 14a, 14b, 14c, 14d auf. In der Ausricht- und Fixierstation 14a, 14b, 14c, 14d wird das Kaschierelement auf dem Trägerelement, z.B. von Knickarmrobotern, in eine vorbestimmte relative Lage gebracht und reversibel an diesem fixiert, damit sich die relative Lage des Kaschierelements zum Trägerelement nicht verändert. Alternativ kann der erste Fertigungsabschnitt 10 auch derart ausgebildet sein, dass die Bereitstellung, das Ausrichten und das Fixieren an einer einzelnen Universalarbeitsstation ausgeführt werden und dass der erste Fertigungsabschnitt 10 mehrere, z.B. vier, dieser Universalarbeitsstationen aufweist.

Der zweite Fertigungsabschnitt 20 gemäß Alternative 2 weist eine - nicht dargestellte - zweite Bereitstellungsstation, eine - nicht dargestellte - Auftragsstation, eine - nicht dargestellte - Aufsetzstation sowie eine zuvor beschriebene Aufwärmstation 22 und Pressstation 24 auf. In der zweiten Bereitstellungsstation wird eine Interieurkomponente in bekannter Weise auf der Transporteinheit 30 abgelegt. In der Auftragsstation wird das Kaschiermittel auf der Haftseite des Kaschierelements und/oder der zu kaschierenden Oberfläche der Interieurkomponente auf bekannte Weise aufgetragen. Anschließend wird das Kaschierelement samt Trägerelement in der Aufsetzstation auf der Interieurkomponente abgesetzt, so dass die zu kaschierende Oberfläche der Interieurkomponente von dem Kaschierelement bedeckt ist. Vorzugsweise weist das Trägerelement eine entsprechende Zentriervorrichtung auf, um eine korrekte Positionierung des Kaschierelements auf der Interieurkomponente zu erleichtern.

Anschließend wird die Transporteinheit 30 in die Aufwärmstation 22 und Pressstation 24 verfahren. Das Lösen der temporären Fixierung des Kaschierelements an dem Trägerelement und die Entnahme des Trägerelements erfolgt nach der Aufsetzstation vorzugsweise vor der Aufwärmstation 22, kann aber auch nach der Aufwärmstation 22 oder der Pressstation 24 erfolgen.

Die voranstehende Erläuterung des erfindungsgemäßen Verfahrens und des erfindungsgemäßen Fertigungssystems beschreibt die vorliegende Erfindung ausschließlich im Rahmen eines Beispiels. Selbstverständlich können, sofern technisch sinnvoll, die Reihenfolge einzelne Verfahrensschritte verändert oder weitere Verfahrensschritte hinzugefügt werden, ohne den Rahmen der vorliegenden Erfindung zu verlassen.

### Bezugszeichenliste

- 1: Fertigungssystem
- 10: Erster Fertigungsabschnitt
- 12a: Bereitstellungsstation
- 12b: Bereitstellungsstation
- 12c: Bereitstellungsstation
- 12d: Bereitstellungsstation
- 14a: Ausricht- und Fixierstation
- 14b: Ausricht- und Fixierstation
- 14c: Ausricht- und Fixierstation
- 14d: Ausricht- und Fixierstation
- 16a: Anordnungsstation
- 16b: Anordnungsstation
- 16c: Anordnungsstation
- 16d: Anordnungsstation
- 20: Zweiter Fertigungsabschnitt
- 22: Aufwärmstation
- 24: Pressstation
- 26: Fixierstation
- 30: Transporteinheit

- T: Transportrichtung

## Patentansprüche

1. Verfahren zum Kaschieren von Interieurkomponenten von Fahrzeugen, aufweisend die folgenden Schritte:
- Bereitstellen mindestens eines Kaschierelements, mindestens eines Kaschiermittels und mindestens einer Interieurkomponente,
- Anordnen des Kaschierelements auf einem Trägerelement in einem ersten Hauptprozess,
- Fixierung des Kaschierelements an einer Interieurkomponente unter Verfestigung des Kaschiermittels in einem zweiten Hauptprozess, wobei das Kaschiermittel zwischen dem Kaschierelement und der Interieurkomponente angeordnet ist;
wobei der erste Hauptprozess in einem ersten Fertigungsabschnitt (10) und der zweite Hauptprozess in einem zweiten Fertigungsabschnitt (20) eines Fertigungssystems (1) ausgeführt werden, wobei in dem ersten Fertigungsabschnitt (10) mehrere erste Hauptprozesse parallel durchgeführt werden, so dass der erste Fertigungsabschnitt (10) und der zweite Fertigungsabschnitt (20) eine im Wesentlichen gleiche Fertigungskapazität aufweisen, wobei der erste Hauptprozess eine Positionierung und eine Ausrichtung des Kaschierelements auf dem Trägerelement aufweist, und wobei im zweiten Hauptprozess eine Ausrichtung des Kaschierelements durch eine Ausrichtung des Trägerelements erfolgt.

2. Verfahren nach Anspruch 1, **dadurch gekennzeichnet, dass** das Trägerelement als Interieurkomponente ausgebildet ist.

3. Verfahren nach Anspruch 1 oder 2, **dadurch gekennzeichnet, dass** das Trägerelement eine Topografie aufweist, die einem inversen Abbild der zu kaschierenden Oberfläche der Interieurkomponente entspricht und das Kaschierelement entsprechend auf dem Trägerelement angeordnet wird, so dass beim Zusammensetzen des Trägerelements mit der Interieurkomponente das Kaschierelement relativ zur Interieurkomponente eine vordefinierte Lage aufweist.

4. Verfahren nach einem der vorangegangenen Ansprüche, **dadurch gekennzeichnet, dass** das Kaschierelement während des Anordnens bzw. nach dem Anordnen auf dem Trägerelement an diesem reversibel, insbesondere über eine Klemmvorrichtung oder eine temporäre Verklebung, fixiert wird.

5. Verfahren nach einem der vorangegangenen Ansprüche, **dadurch gekennzeichnet, dass** das Anordnen des Kaschierelements auf dem Trägerelement auf einer verfahrbaren Transporteinheit (30) erfolgt.

6. Verfahren nach Anspruch 5, **dadurch gekennzeichnet, dass** das Kaschierelement und/oder das Kaschiermittel vor dem zweiten Hauptprozess auf der Transporteinheit (30) mindestens einem Behandlungsprozess, insbesondere einer thermischen und/oder chemischen Behandlung, unterzogen werden.

7. Verfahren nach einem der vorangegangenen Ansprüche, **dadurch gekennzeichnet, dass** die Verfestigung des Kaschiermittels durch Druck erfolgt, wobei der Druck über ein Oberwerkzeug, einen Roboter und/oder eine Walze auf das Kaschierelement aufgebracht wird, und/oder dass die Verfestigung des Kaschiermittels durch Temperatur erfolgt.

8. Fertigungssystem (1) zur Durchführung eines Verfahrens nach einem der Ansprüche 1 bis 7, aufweisend:
- eine Mehrzahl von Transporteinheiten (30) zur Aufnahme von jeweils mindestens einer Interieurkomponente,
- eine Mehrzahl von Anordnungsstationen (16a, 16b, 16c, 16d) zur Anordnung von Kaschierelementen auf Trägerelementen, insbesondere Interieurkomponenten, wobei die Trägerelemente auf Transporteinheiten (30) angeordnet sind, und
- eine Kaschieranlage mit mindestens einer Fixierstation (26) zur Fixierung von Kaschierelementen an den Interieurkomponenten,
wobei das Fertigungssystem mindestens doppelt so viele Anordnungsstationen (16a, 16b, 16c, 16d) wie Fixierstationen (26) aufweist.

9. Fertigungssystem nach Anspruch 8, **dadurch gekennzeichnet, dass** die Kaschiermaschine mindestens ein Oberwerkzeug und/oder einen Roboter und/oder eine Walze zum Anpressen von Kaschierelementen an die Interieurkomponenten aufweist.

## Claims

1. A method for laminating interior components of vehicles, having the following steps:
- providing at least one laminating element, at least one laminant and at least one interior component,
- arranging the laminating element on a support element in a first main process,
- fixing the laminating element on an interior component while solidifying the laminant in a second main process, wherein the laminant is arranged between the laminating element and the interior component;
wherein the first main process is carried out in a first manufacturing portion (10) and the second main process in a second manufacturing portion (20) of a manufacturing system (1), wherein a plurality of first main processes are carried out in parallel in the first manufacturing portion (10), so that the first manufacturing portion (10) and the second manufacturing portion (20) have a substantially identical manufacturing capacity, wherein the first main process comprises positioning and alignment of the laminating element on the support element, and wherein in the second main process alignment of the laminating element takes place by alignment of the support element.

2. A method according to Claim 1, **characterised in that** the support element is designed as an interior component.

3. A method according to Claim 1 or Claim 2, **characterised in that** the support element has a topography which corresponds to an inverse image of the surface of the interior component which is to be laminated, and the laminating element is arranged correspondingly on the support element, so that upon assembling the support element with the interior component the laminating element has a predefined position relative to the interior component.

4. A method according to one of the preceding claims, **characterised in that** the laminating element during or after the arranging on the support element is fixed thereto in reversible manner, especially by means of a clamping device or temporary gluing.

5. A method according to one of the preceding claims, **characterised in that** the arranging of the laminating element on the support element takes place on a movable transport unit (30).

6. A method according to Claim 5, **characterised in that** the laminating element and/or the laminant prior to the second main process is/are subjected to at least one treatment process, especially a thermal and/or chemical treatment, on the transport unit (30).

7. A method according to one of the preceding claims, **characterised in that** the solidifying of the laminant takes place by pressure, the pressure being applied to the laminating element via an upper tool, a robot and/or a roller, and/or **in that** the solidifying of the laminant takes place by temperature.

8. A manufacturing system (1) for carrying out a method according to one of Claims 1 to 7, having:
- a plurality of transport units (30) for receiving at least one interior component in each case,
- a plurality of arrangement stations (16a, 16b, 16c, 16d) for arranging laminating elements on support elements, in particular interior components, wherein the support elements are arranged on transport units (30), and
- a laminating installation having at least one fixing station (26) for fixing laminating elements to the interior components,
wherein the manufacturing system has at least twice as many arrangement stations (16a, 16b, 16c, 16d) as there are fixing stations (26).

9. A manufacturing system according to Claim 8, **characterised in that** the laminating machine has at least an upper tool and/or a robot and/or a roller for pressing laminating elements against the interior components.

## Revendications

1. Procédé permettant de contre-coller des composants internes de véhicules comprenant les étapes suivantes consistant à :
- se procurer au moins un élément de contre-collage, au moins un moyen de contre-collage et au moins un composant interne,
- positionner l'élément de contre-collage sur un élément de support lors d'un premier processus principal,
- fixer l'élément de contre-collage sur un composant interne en fixant le moyen de contre-collage lors d'un second processus principal, le moyen de contre-collage étant positionné entre l'élément de contre-collage et le composant interne,
- le premier processus principal étant mis en oeuvre dans un premier segment de finition (10) et le second processus principal étant mis en oeuvre dans un second segment de finition (20) d'un système de finition (1), dans le premier segment de finition (10), plusieurs premiers processus principaux étant mis en oeuvre en parallèle de sorte que le premier segment de finition (10) et le second segment de finition (20) aient des capacités de finition essentiellement similaires, le premier processus principal comprenant un positionnement et une orientation de l'élément de contre-collage sur l'élément de support, et lors du second processus principal une orientation de l'élément de contre-collage étant effectuée par orientation de l'élément support.

2. Procédé conforme à la revendication 1,
**caractérisé en ce que**
l'élément de support est réalisé sous la forme de composants internes.

3. Procédé conforme à la revendication 1 ou 2,
**caractérisé en ce que**
l'élément de support a une topographie qui correspond à l'image en creux de la surface à contre-coller du composant interne, et l'élément de contre-collage est positionné de façon correspondante sur l'élément de support, de sorte que lors de l'assemblage de l'élément de support avec le composant interne, l'élément de contre-collage ait une position prédéfinie par rapport au composant interne.

4. Procédé conforme à l'une des revendications précédentes,
**caractérisé en ce que**
l'élément de contre-collage est fixé pendant le positionnement ou après le positionnement sur l'élément de support, de façon réversible sur celui-ci, en particulier par un dispositif de pincement ou un collage temporaire.

5. Procédé conforme à l'une des revendications précédentes,
**caractérisé en ce que**
le positionnement de l'élément de contre-collage sur l'élément de support s'effectue sur une unité de transport mobile (30).

6. Procédé conforme à la revendication 5,
**caractérisé en ce que**
l'élément de contre-collage et/ou le moyen de contre-collage est(sont) soumi(s) avant le second processus principal, sur l'unité de transport (30), à au moins un processus de traitement, en particulier, un traitement thermique et/ou chimique.

7. Procédé conforme à l'une des revendications précédentes,
**caractérisé en ce que**
la fixation du moyen de contre-collage s'effectuer par pression, la pression étant appliquée sur l'élément de contre-collage, par un outil supérieur, un robot et/ou d'un rouleau et/ou la fixation du moyen de contre-collage est effectuée par l'intermédiaire de la température.

8. Système de finition (1) permettant la mise en oeuvre du procédé conforme à l'une des revendications 1 à 7, comprenant :
- un ensemble d'unités de transport (30) respectivement destinées à recevoir au moins un composant interne,
- un ensemble de postes de positionnement (16a, 16b, 16c, 16d) permettant de positionner des éléments de contre-collage sur des éléments de support, en particulier des composants internes, les éléments de support étant positionnés sur des unités de transport (30), et
- une installation de contre-collage ayant au moins un poste de fixation (26) permettant de fixer des éléments de contre-collage sur les composants internes,
le système de finition comprenant au moins deux fois plus de postes de positionnement (16a, 16b, 16c, 16d) que de postes de fixation (26).

9. Système de finition conforme à la revendication 8,
**caractérisé en ce que**
la machine de contre-collage comporte au moins un outil supérieur et/ou un robot et/ou un rouleau permettant de comprimer des éléments de contre-collage sur les composants internes.
